(19) Europäisches Patentamt
European Patent Office
Office européen des brevets

(11) Veröffentlichungsnummer: **0 387 592 B1**

# (12) EUROPÄISCHE PATENTSCHRIFT

(45) Veröffentlichungstag der Patentschrift: **02.02.94**

(51) Int. Cl.⁵: **C08K 5/54**, C08L 71/12, C08L 25/02

(21) Anmeldenummer: **90103755.6**

(22) Anmeldetag: **26.02.90**

Die Akte enthält technische Angaben, die nach dem Eingang der Anmeldung eingereicht wurden und die nicht in dieser Patentschrift enthalten sind.

## (54) Thermoplastische Formmassen auf Basis von Polyphenylenether und vinylaromatischen Polymeren.

(30) Priorität: **11.03.89 DE 3907992**

(43) Veröffentlichungstag der Anmeldung: **19.09.90 Patentblatt 90/38**

(45) Bekanntmachung des Hinweises auf die Patenterteilung: **02.02.94 Patentblatt 94/05**

(84) Benannte Vertragsstaaten: **BE DE ES FR GB NL**

(56) Entgegenhaltungen:
**EP-A- 0 182 163**
**DE-A- 3 118 629**

**CHEMICAL ABSTRACTS, Band 109, Nr. 24, 12. Dezember 1988, Seite 37, Zusammenfassung Nr. 211980b, Columbus, Ohio, US; & JP-A-63 113 070**

**CHEMICAL ABSTRACTS, Band 103, Nr. 10, 9. September 1985, Seite 48, Zusammenfassung Nr. 72333d, Columbus, Ohio, US; & JP-A-60 071 649**

(73) Patentinhaber: **BASF Aktiengesellschaft**
**Carl-Bosch-Strasse 38**
**D-67063 Ludwigshafen(DE)**

(72) Erfinder: **Ostermayer, Bertram, Dr.**
**Zeppelinstrasse 179**
**D-6900 Heidelberg(DE)**
Erfinder: **Benker, Klaus**
**Fuerstenweg 52**
**D-6730 Neustadt(DE)**
Erfinder: **Hedtmann-Rein, Carola, Dr.**
**Winzerweg 1**
**D-6945 Hirschberg(DE)**
Erfinder: **Baumgartner, Ehrenfried, Dr.**
**Goethestrasse 1**
**D-6701 Roedersheim-Gronau(DE)**
Erfinder: **Muehlbach, Klaus, Dr.**
**Dr.-Heinrich-Winter-Strasse 19**
**D-6148 Heppenheim(DE)**
Erfinder: **Boehlke, Klaus, Dr.**
**Gerhart-Hauptmann-Strasse 53**
**D-6717 Hessheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

CHEMICAL ABSTRACTS, Band 82, Nr. 6, 30. Juni 1975, Seite 45, Zusammenfassung Nr. 172038c, Columbus, Ohio, US; & SU-A-449 080

## Beschreibung

Die Erfindung betrifft thermoplastische Formmassen, enthaltend als wesentliche Komponenten

(A) 9,9 bis 89,9 Gew.-% Polyphenylenether,

(B) 10 bis 90 Gew.-% eines vinylaromatischen Polymeren und

(C) 0,1 bis 5 Gew.-% einer niedermolekularen Verbindung, die mindestens eine Si-O-C-Gruppe und mindestens eine Epoxidgruppe oder schwefelhaltige Gruppe enthält.

Formmassen aus Polyphenylenether und schlagfestem Polystyrol und Polysiloxanen sind bekannt aus DE-A 3 118 629. Nicht ganz befriedigend ist die Spannungsrißbeständigkeit.

In der deutschen Anmeldung P 37 41 670.7 werden Mischungen aus Polyphenylenether, schlagzähmodifiziertem Polystyrol und einem silanhaltigen Polymerisat aus Styrol und silanhaltigem Methacrylat beschrieben.

Gemäß EP-B 107 835 können Alkylsulfonate die Spannungsrißbeständigkeit von Blends aus Polyphenylenether und schlagzähmodifiziertem Polystyrol beeinflussen. Nachteilig ist jedoch die schlechte Wärmeformbeständigkeit und die schlechte Eigenfarbe. Auch die Spannungsrißbeständigkeit und Zähigkeit sind noch verbesserungsbedürftig.

Aus EP-A 182 163 waren Mischungen aus Polyamid, Polyphenylenether und einem Silan als Verarbeitungshilfsmittel bekannt. Nachteilig bei diesen Polyamidformmassen ist ihre hohe Wasseraufnahme, ihre geringe Dimensionsstabilität nach der Verarbeitung sowie ihre ungünstige Farbqualität.

In DE-A 3 619 225 werden Formmassen aus vinylaromatischen Polymeren und Polyphenylenether, der mit Maleinimid modifiziert ist, offenbart. Es zeigte sich, daß die Spannungsrißbeständigkeit noch verbesserungsbedürftig ist.

Aufgabe war es daher, thermoplastische Formmassen auf Basis von Polyphenylenether und vinylaromatischen Polymeren bereitzustellen, die gute mechanische Eigenschaften wie Zähigkeit, gute Wärmeformbeständigkeit, gute Spannungsrißbeständigkeit und Farbqualität aufweisen.

Demgemäß wurden die oben definierten thermoplastischen Formmassen gefunden.

Weiterhin wurden bevorzugte Ausführungsformen gemäß der Unteransprüche, ein Verfahren zur Herstellung der Formmassen und ihre Verwendung zur Herstellung von Formteilen und Halbzeug gefunden.

Die erfindungsgemäßen Formmassen enthalten als wesentliche Komponenten 9,9 bis 89,9, bevorzugt 19,9 bis 79,9 und insbesondere 29,7 bis 69,7 Gew.-% A, 10 bis 90, bevorzugt 20 bis 80 und insbesondere 30 bis 70 Gew.-% B und 0,1 bis 5, bevorzugt 0,1 bis 4 und insbesondere 0,3 bis 3 Gew.-% C, wobei die Gew.-% jeweils auf die Summe von A, B und C bezogen sind.

Die in Frage kommenden Polyphenylenether A sind an sich bekannt, sie werden nach üblichen Verfahren aus in ortho-Position durch Alkylgruppen, Alkoxigruppen, Chlor oder Brom disubstituierten Phenolen durch oxidative Kopplung hergestellt (vgl. US-Patent 3 661 848, 3 378 505, 3 306 874, 3 306 875 und 3 639 656). Die Alkyl- oder Alkoxigruppen, die bevorzugt 1 bis 4 C-Atome, aber kein $\alpha$-ständiges tertiäres Wasserstoffatom enthalten, können ihrerseits durch Chlor oder Brom substituiert sein. Geeignete Polyphenylenether sind beispielsweise Poly-2,6-diethyl-1,4-phenylenether, Poly-2-methyl-6-ethyl-1,4-phenylenether, Poly-2-methyl-6-propyl-1,4-phenylenether, Poly-2,6-dipropyl-1,4-phenylenether, Poly-2-ethyl-6-propyl-1,4-phenylenether, Poly-2,6-dichlor-1,4-phenylenether und Poly-2,6-dibrom-1,4-phenylenether oder Copolymere, wie solche, die 2,3,6-Trimethylphenol enthalten, außerdem Polymermischungen. Bevorzugt ist Poly-2,6-dimethyl-1,4-phenylenether. Die Polyphenylenether weisen im allgemeinen eine intrinsische Viskosität von 0,5 bis 0,9 dl/g, gemessen in Chloroform bei 25 °C, auf.

Üblicherweise werden mit Vorteil die genannten Polyphenylenether eingesetzt. In manchen Fällen hat es sich jedoch als sinnvoll erwiesen, modifizierte Polyphenylenether zu verwenden. Solche Polyphenylenether haben beispielsweise eine Verbindung eingebaut, die eine C-C-Doppel- oder Dreifachbindung und eine Carbonsäuregruppe oder dessen Derivate wie Maleinsäure, Maleinsäureanhydrid, Fumarsäure, Maleinimid oder das Säurechlorid des Trimellithsäureanhydrids enthalten. Solche modifizierten Polyphenylenether sind beispielsweise aus WO-A 87/00540 bekannt.

Als vinylaromatische Polymere B kommen alle üblichen Homo- und Copolymerisate des Styrols in Betracht. Üblicherweise liegen die Molekulargewichte der gebräuchlichen Styrolpolymerisate (Gewichtsmittel $M_w$) zwischen 150 000 und 300 000. Geeignete Styrolpolymerisate werden überwiegend aus Styrol, ferner aus mit $C_1$-$C_4$-Alkyl kern- oder seitenkettenalkylierten Styrolen wie $\alpha$-Methylstyrol oder p-Methyl-Styrol nach bekannten Verfahren in Masse, Lösung oder Suspension hergestellt (vgl. Ullmanns Encyclopädie der Technischen Chemie, Band 19, Seiten 265 bis 272, Verlag Chemie, Weinheim 1980).

Die vinylaromatischen Polymeren sind bevorzugt schlagzäh modifiziert.

Die Schlagzähmodifizierung kann durch Zumischen von geringen Mengen, vorzugsweise von 2 bis 20 Gew.-%, bezogen auf das vinylaromatische Polymerisat, eines Kautschuks erreicht werden. Genannt seien

Olefinkautschuke wie EPDM-Kautschuk, Acrylatkautschuke oder Polymerisate eines konjugierten Diens wie Butadien oder Isopren. Die Dienpolymerisate können teilweise oder vollständig hydriert sein. Der Kautschuk sollte eine Glastemperatur von unter 0 °C, gemessen nach K.H. Illers und H. Breuer, Kolloid Zeitschrift 176 (1961), S. 110, aufweisen. Geeignet sind übliche Kautschuke wie Polybutadienkautschuk, Acrylatkautschuk, Styrolbutadienkautschuk, hydrierter Styrolbutadienkautschuk, Acrylnitrilbutadienkautschuk, Polyisoprenkautschuk, Ionomere, Styrolbutadienblockcopolymere einschließlich AB-, ABA-, ABAB-verschmiert(taper)Block-Copolymere, Stern-Block-Copolymere und ähnliche, analoge Isoprenblockpolymerisate, und insbesondere (teil)hydrierte Blockcopolymere, wie sie an sich aus EP-A 62 283 bekannt sind. Derartige synthetische Kautschuke sind dem Fachmann geläufig.

Die Schlagzähmodifizierung kann in bevorzugter Weise auch dadurch bewerkstelligt werden, daß das vinylaromatische Polymerisat in Gegenwart kleinerer Mengen, zum Beispiel 2 bis 20 Gew.-% bezogen auf das vinylaromatische Polymerisat, eines kautschukartigen Polymerisates der oben genannten Art, beispielsweise auf Basis eines konjugierten Diens, gegebenenfalls auch eines Acrylatkautschuks, hergestellt werden (HIPS). Dabei sind kautschukartige Polymerisate auf der Basis von Butadien, z.B. Styrol-Butadien-Polymerisate, Polybutadien und Butadien-Styrol-Blockcopolymerisate geeignet.

Diese in bestimmter Weise schlagzäh modifizierten Styrolpolymerisate sind dem Fachmann aus der Literatur und Praxis so geläufig, daß sich an dieser Stelle eine nähere Erläuterung erübrigt (vgl. "Ullmanns Encyklopädie der technischen Chemie", 4. Auflage, Band 19, Seiten 272 bis 295, Verlag Chemie GmbH, 1980).

Die Verbindung C ist an sich bekannt. Sie ist niedermolekular, d.h. sie enthält nicht mehr als 10, bevorzugt nicht mehr als 3, insbesondere ein Si-Atom. Üblicherweise wird eine Verbindung der allgemeinen Formel I

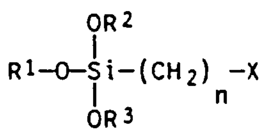 I

verwendet, in der

$R^1$, $R^2$ und $R^3$ unabhängig voneinander Alkyl, Cycloalkyl, Aralkyl mit bis zu 20 C-Atomen, insbesondere Methyl, Ethyl und Propyl,

X ein Rest, der eine Gruppe enthaltend ein Schwefelatom oder bevorzugt eine Epoxidgruppe enthält,

und

n eine ganze Zahl von 1 bis 8, bevorzugt 1 bis 3 sind.

Bevorzugt werden Verbindungen, die keine olefinische CC-Doppelbindung enthalten.

Beispielhaft seien die Verbindungen mit den in folgender Tabelle angegebenen Strukturen genannt. In der Tabelle sind auch die verwendeten Namen angegeben.

| Name | Struktur |
|---|---|
| γ-Mercaptopropyltrimethoxisilan | $HS(CH_2)_3Si(OCH_3)_3$ |
| γ-Glycidyloxipropyltrimethoxisilan | 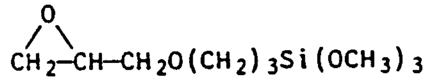 |

Solche Verbindungen sind im Handel erhältlich.

Zusätzlich zu diesen wesentlichen Komponenten können die erfindungsgemäßen Formmassen als Komponente D übliche Verstärkungsmaterialien wie Glaskugeln, Mineralfasern, Whisker, Aluminiumoxidfasern, Glimmer oder insbesondere Glasfasern in Mengen von 10 bis 40 Gew.-Teilen, bezogen auf 100 Gew.-Teile der Summe der Komponenten A, B und C, enthalten.

Die Glasfasern können aus E-, A- oder C-Glas sein. Sie können mit einer Schlichte aus einem Haftvermittler ausgerüstet sein. Ihr Durchmesser liegt im allgemeinen zwischen 6 und 20 µm. Es können sowohl strangförmige Endlosfasern (rovings) als auch Schnittglasfasern mit einer Länge von 1 bis 10 mm, vorzugsweise 3 bis 6 mm oder Kurzglasfasern mit einer Länge von 0,05 bis 1,5 mm eingesetzt werden.

In manchen Fällen hat es sich als vorteilhaft erwiesen, keine Verstärkungsmaterialien D einzusetzen.

Zusätzlich zu den genannten Komponenten können die erfindungsgemäßen Formmassen weitere Stoffe wie übliche Hitze- und Lichtstabilisatoren, Gleit- und Entformungsmittel und Färbemittel wie Farbstoffe und Pigmente in üblichen Mengen enthalten. Ferner seien Flammschutzmittel genannt, insbesondere phosphorhaltige, wie Phosphorsäureester, Phosphinsäureester und Phosphinoxide. Gute Flammhemmung wird mit Triphenylphosphat und Triphenylphosphinoxid erzielt.

Die Herstellung der erfindungsgemäßen thermoplastischen Formmassen erfolgt zweckmäßigerweise durch Mischen der Komponenten bei Temperaturen im Bereich von 200 bis 320 °C, vorzugsweise 250 bis 300 °C in üblichen Mischvorrichtungen, wie z.B. Knetern, Banburry-Mischern und Einschneckenextrudern, vorzugsweise in einem Zweischneckenextruder. Um eine möglichst homogene Formmasse zu erhalten, ist eine intensive Durchmischung notwendig, was in bekannter Weise erreicht werden kann. Die Verweilzeiten liegen im allgemeinen im Bereich von 0,5 bis 30 min., vorzugsweise von 1 bis 5 min. Die Reihenfolge des Mischens der Komponenten kann variiert werden, es können ausgewählte Komponenten vorgemischt sein oder es können auch alle Komponenten gemeinsam gemischt werden.

Dabei kann die Komponente C in Substanz oder in einem geeigneten inerten Lösungs- oder Dispergiermittel wie z.B. Toluol oder niedrigsiedende Kohlenwasserstoffe wie Hexan eingemischt werden. Dies kann in einigen Fällen schnell zu einer gleichmäßigen Verteilung von C in der Formmasse führen. Das Lösungs- und Dispergiermittel wird in diesem Falle durch geeignete Maßnahmen, wie Anlegen von Vakuum, entfernt.

Es sei erwähnt, daß die erfindungsgemäßen Formmassen in untergeordneten Mengen auch Reaktionsprodukte der Komponenten enthalten können.

Die erfindungsgemäßen Formmassen eignen sich gut zur Herstellung von Formteilen aller Art, z.B. durch Spritzguß oder Extrudieren. Sie können weiterhin dienen zur Herstellung von Folien und Halbzeug im Tiefzieh- oder Blasverfahren.

Die Formmassen bzw. die daraus hergestellten Formkörper zeichnen sich durch ein ausgewogenes Verhältnis von thermischen und mechanischen Eigenschaften aus. Sie besitzen dabei eine gute Wärmeformbeständigkeit, multiaxiale Zähigkeit, Spannungsrißbeständigkeit und Farbqualität.

Beispiel 1 und Vergleichsversuche 1 bis 5

Für Beispiele und Vergleichsversuche wurden die folgenden Komponenten verwendet:

Komponente A

A (1): Poly-2,6-dimethyl-1,4-phenylenether mit einer intrinsischen Viskosität von 0,55 dl/g, gemessen in $CHCl_3$ bei 25 °

A (2): wie A(1), jedoch mit einer relativen Viskosität von 0,65 dl/g.

Komponente B

B (1): Schlagfestes Polystyrol 576 M (BASF) mit einem Gehalt von 8 Gew.-% Butadien und einem Schmelzindex von 5,5 g/10 min., gemessen nach DIN 53 735 bei 200 °C und 5 kg Last.

B (2): Schlagfestes Polystyrol 586 G der BASF AG mit einem Gehalt von 10 Gew.-% Butadien und einem Schmelzindex (200 °C/5 kg) von 4 g/10 min.

Komponente C

C (1): γ-Aminopropyltrimethoxisilan

C (2): (((N'-β-Aminoethyl)N-β-aminoethyl)-γ-aminopropyl)trimethoxisilan

C (3): γ-Glycidyloxipropyltrimethoxisilan.

Die Komponenten C(1) und C(2) liegen außerhalb des Umfangs der Patentansprüche.

Die in Tabelle 1 angegebenen Komponenten wurden mit jeweils 0,08 kg Tris(nonylphenyl)phosphit und 0,15 kg Polyethylen auf einem 2-Wellen-Extruder bei 280 °C geschmolzen, homogenisiert, gemischt und granuliert.

Die in Tabelle 2 genannten Parameter wurden an bei 280 °C spritzgegossenen Prüfkörpern wie folgt bestimmt:

Die Vicattemperatur VST/B nach DIN 53 460.

Die Durchstoßarbeit DSTA nach DIN 53 443.

Die Spannungsrißbeständigkeit wurde nach DIN 53 449 Tl. 1 ermittelt. Verwendet wurden Probekörper, die für die Dauer einer Stunde in Isopropanol gelagert wurden. Als Indikationseigenschaften dienten Zugfestigkeit und Reißdehnung gemäß DIN 53 455.

Tabelle 1

| Beispiele und Vergleichsversuche | Zusammensetzung der Formmasse | | | | | |
|---|---|---|---|---|---|---|
| | Art | Menge [kg] | Art | Menge [kg] | Art | Menge [kg] |
| 1* | $A_1$ | 4,0 | $B_1$ | 5,9 | $C_1$ | 0,1 |
| 1 | $A_2$ | 3,5 | $B_2$ | 6,3 | $C_3$ | 0,2 |
| 2* | $A_2$ | 3,5 | $B_2$ | 6,3 | - | - )* |
| 3* | $A_1$ | 5,0 | $B_2$ | 4,85 | $C_2$ | 0,15 |
| 4* | $A_2$ | 6,5 | $B_1$ | 3,25 | $C_2$ | 0,25 |
| 5* | $A_2$ | 6,5 | $B_1$ | 3,5 | - | - |

)* 2* enthält 0,2 kg Alkylsulfonat K30 der Bayer AG

Tabelle 2

| Beispiele und Vergl. Versuche | Eigenschaften | | | |
|---|---|---|---|---|
| | Vicat B [°C] | DSTA [Nm] | Rißgrenze $U_R$ [µm] Zugfestigkeit | Reißdehnung |
| 1* | 132 | 40 | > 500 | > 500 |
| 1 | 125 | 38 | > 500 | > 500 |
| 2* | 122 | 32 | 400 | 390 |
| 3* | 145 | 48 | > 500 | > 500 |
| 4* | 157 | 65 | > 500 | > 500 |
| 5* | 152 | 12 | 90 | 80 |

**Patentansprüche**

**1.** Thermoplastische Formmassen, enthaltend als wesentliche Komponenten
(A) 9,9 bis 89,9 Gew.-% Polyphenylenether,
(B) 10 bis 90 Gew.-% eines vinylaromatischen Polymeren und
(C) 0,1 bis 5 Gew.-% einer niedermolekularen Verbindung, die mindestens eine Si-O-C-Gruppe und mindestens eine Epoxidgruppe oder schwefelhaltige Gruppe enthält.

**2.** Thermoplastische Formmassen nach Anspruch 1, enthaltend 19,9 bis 79,9 Gew.-% A, 20 bis 80 Gew.-% B und 0,1 bis 4 Gew.-% C.

**3.** Thermoplastische Formmassen nach Anspruch 1 oder 2, in denen B schlagzäh modifiziert ist.

**4.** Thermoplastische Formmassen nach mindestens einem der Ansprüche 1 bis 3, in denen C eine Verbindung der allgemeinen Formel I

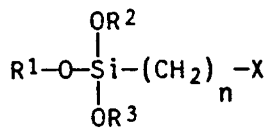

I,

ist, in der
$R^1$, $R^2$ und $R^3$ unabhängig voneinander Alkyl, Cycloalkyl, Aralkyl mit bis zu 20 C-Atomen, insbesondere Methyl, Ethyl und Propyl,
X ein Rest, der eine Gruppe mit einem Schwefelatom oder bevorzugt eine Epoxidgruppe enthält, und
n eine ganze Zahl von 1 bis 8 sind.

**5.** Thermoplastische Formmassen nach mindestens einem der Ansprüche 1 bis 4, in denen C $\gamma$-Glycidyloxipropyltrimethoxisilan ist.

**6.** Verfahren zur Herstellung von thermoplastischen Formmassen nach mindestens einem der Ansprüche 1 bis 5, dadurch gekennzeichnet, daß die Komponenten bei 200 bis 320 °C im Verlaufe von 0,5 bis 30 Minuten gemischt werden.

**7.** Verwendung von thermoplastischen Formmassen gemäß mindestens einem der Ansprüche 1 bis 5 oder hergestellt nach Anspruch 6 zur Herstellung von Formteilen.

**Claims**

**1.** A thermoplastic molding composition containing as essential components
(A) 9.9-89.9% by weight of a polyphenylene ether,
(B) 10-90% by weight of an aromatic vinyl polymer and
(C) 0.1-5% by weight of a low molecular weight compound which contains at least one Si-O-C group and at least one epoxy or sulfur-containing group.

**2.** A thermoplastic molding composition as claimed in claim 1, containing 19.9-79.9% by weight of A, 20-80% by weight of B and 0.1-4% by weight of C.

**3.** A thermoplastic molding composition as claimed in claim 1 or 2, wherein B is an impact modified grade.

**4.** A thermoplastic molding composition as claimed in at least one of claims 1 to 3, wherein C is a compound of the general formula I

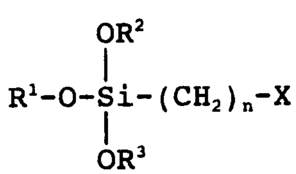

I

where
$R^1$, $R^2$ and $R^3$ are each independently of the others alkyl, cycloalkyl or aralkyl of up to 20 carbon atoms, in particular methyl, ethyl, or propyl,
X is a radical which contains a group containing a sulfur atom or preferably an epoxy group, and
n is an integer from 1 to 8.

**5.** A thermoplastic molding composition as claimed in at least one of claims 1 to 4, wherein C is $\gamma$-glycidyloxypropyltrimethoxysilane.

**6.** A process for producing a thermoplastic molding composition as claimed in at least one of claims 1 to 5, which comprises mixing the components at 200-320 °C in the course of 0.5-30 minutes.

7. The use of a thermoplastic molding composition as claimed in at least one of claims 1 to 5 or produced as claimed in claim 6 for producing moldings.

**Revendications**

1. Masses à mouler thermoplastiques, contenant comme composants essentiels
   (A) de 9,9 a 89,9% en poids de poly(oxyphénylène),
   (B) de 10 à 90% en poids d'un polymère vinylaromatique et
   (C) de 0,1 à 5% en poids d'un compose de faible poids moléculaire qui contient au moins un groupement Si-O-C et au moins un groupement époxy ou un groupement contenant du soufre.

2. Masses à mouler thermoplastiques selon la revendication 1, contenant de 19,9 à 79,9% en poids de A, de 20 à 80% en poids de B et de 0,1 à 4% en poids de C.

3. Masses à mouler thermoplastiques selon la revendication 1 ou 2, dans lesquelles B est modifié pour être résistant aux chocs.

4. Masses à mouler thermoplastiques selon au moins l'une des revendications 1 à 3, dans lesquelles C est un composé de formule générale I

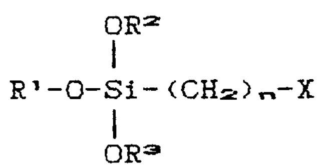

I,

dans laquelle
$R^1$, $R^2$ et $R^3$ indépendamment l'un de l'autre sont des groupements alkyle, cycloalkyle, aralkyle avec jusqu'à 20 atomes de carbone, en particulier méthyle, éthyle et propyle,
X est un reste qui contient un groupement avec un atome de soufre ou de préférence un groupement époxy, et n est un entier de 1 à 8.

5. Masses à mouler thermoplastiques selon au moins l'une des revendications 1 à 4, dans lesquelles C est le $\gamma$-glycidyloxypropyltrimétboxysilane.

6. Procédé de préparation des masses à mouler thermoplastiques selon au moins l'une des revendications 1 à 5, caractérisé en ce qu'on mélange les composants à une température de 200 à 320 °C pendant une période de 0,5 à 30 minutes.

7. Utilisation des masses à mouler thermoplastiques selon au moins l'une des revendications 1 à 5 ou préparées selon la revendication 6, pour la préparation de corps moulés.